# EUROPÄISCHE PATENTSCHRIFT

(11) **EP 1 980 004 B1**
(45) Veröffentlichungstag und Bekanntmachung des Hinweises auf die Patenterteilung: **04.08.2010**
(21) Anmeldenummer: 07712016.0
(22) Anmeldetag: 12.01.2007
(51) Int. Cl.: H02J 1/14, H02J 1/10, H02J 3/46

(54) **VERFAHREN UND VORRICHTUNG ZUR BEREITSTELLUNG EINER VERSORGUNGSSPANNUNG MITTELS PARALLEL GESCHALTETER GENERATOREINHEITEN**
METHOD AND DEVICE FOR PROVIDING A SUPPLY VOLTAGE BY MEANS OF GENERATOR UNITS CONNECTED IN PARALLEL
PROCEDE ET DISPOSITIF PERMETTANT DE DELIVRER UNE TENSION D'ALIMENTAION AU MOYEN D'UNITES GENERATEURS MONTEES EN PARALLELE

(30) Priorität: 16.01.2006 DE 102006001984
(43) Veröffentlichungstag der Anmeldung: 15.10.2008
(73) Patentinhaber: Robert Bosch GmbH, 70442 Stuttgart (DE)
(72) Erfinder: PEUSER, Thomas, 71636 Ludwigsburg (DE)
(86) Internationale Anmeldenummer: PCT/EP2007/050305
(87) Internationale Veröffentlichungsnummer: WO 2007/082850

(56) Entgegenhaltungen:
- EP-A- 1 511 151
- WO-A-01/82445
- DE-A1- 19 704 662

## Beschreibung

Die Erfindung betrifft ein Verfahren und eine Vorrichtung zur Bereitstellung einer Versorgungsspannung mittels parallel geschalteter Generatoreinheiten. Mittels derartig parallel geschalteter Generatoreinheiten kann beispielsweise in einem Kraftfahrzeug die Versorgungsspannung für die Verbraucher des Bordnetzes bereitgestellt werden.

### Stand der Technik

Es ist bereits bekannt, das elektrische Bordnetz eines Kraftfahrzeugs unter Verwendung eines Generators zu versorgen.

Weiterhin ist es bereits bekannt, das Bordnetz bestimmter Fahrzeuge, beispielsweise von Sicherheitsfahrzeugen, Rettungsfahrzeugen und Nutzfahrzeugen, unter Verwendung von mindestens zwei Generatoren mit Energie zu versorgen, um den geforderten Leistungsbedarf und/oder die geforderte Zuverlässigkeit der elektrischen Versorgung gewährleisten zu können.

Der Verschleiß und damit auch die Lebensdauer eines Generators hängt von mehreren Faktoren ab. Einer dieser Faktoren ist seine elektrische Auslastung. Je größer die elektrische Auslastung eines Generators ist, desto größer ist sein Verschleiß und desto niedriger ist seine restliche Lebensdauer. Es ist deshalb wünschenswert, bei Vorrichtungen zur Bereitstellung der Versorgungsspannung für die Verbraucher eines Bordnetzes unter Verwendung mehrerer Generatoren dafür Sorge zu tragen, dass der Auslastungsgrad der verwendeten Generatoren gleich ist.

In der DE 10 2005 12 270.1 sind ein Verfahren und eine Vorrichtung zur Bereitstellung der Versorgungsspannung für die Verbraucher eines Fahrzeug-Bordnetzes unter Verwendung mehrerer Generatoren beschrieben. Jedem der Generatoren ist eine mindestens einen Endstufentransistor aufweisende Regeleinheit zugeordnet. Um den Auslastungsgrad der Generatoren in Übereinstimmung zu bringen, wird in einer der Regeleinheiten ein impulsbreitenmoduliertes Steuersignal oder ein daraus abgeleitetes, das Tastverhältnis des impulsbreitenmodulierten Signals beschreibendes Steuersignal gebildet und den Endstufentransistoren aller Regeleinheiten zugeführt.

Weiterhin ist aus der DE 41 08 861 A1 eine Einrichtung mit parallel geschalteten Generatoren bekannt. Bei dieser bekannten Einrichtung ist jedem der Generatoren ein Spannungsregler zugeordnet. Weiterhin weist die bekannte Einrichtung mindestens eine Batterie auf, deren einer Anschluss über einen Zündschalter mit dem Spannungsregler verbindbar ist. Ferner ist eine Ladeköntrolleinrichtung vorgesehen, die mit dem Zündschalter und den Spannungsreglern in Verbindung steht und über ein Schaltmittel mit dem vorzugsweise auf Masse liegenden negativen Anschluss der Batterie verbindbar ist. Zwischen der Ladekontrolleinrichtung, den Spannungsreglern und dem genannten Schaltmittel liegt eine Schaltungsanordnung mit mehreren in einer Richtung leitenden und in einer Richtung sperrenden Bauelementen. Durch diese bekannte Einrichtung soll erreicht werden, dass durch den Einsatz zweier Generatoren eine hohe elektrische Leistung erzeugt werden kann und dass mit einer einzigen Anzeige, beispielsweise einer Ladekontrolllampe, auftretende Fehler in einem der beiden Generator-Spannungsregler-Systeme angezeigt werden können, wobei das andere Generator-Spannungsregler-System problemlos weiterarbeiten kann.

Aus der EP 1 511 151 A2 ist ein Verfahren zur Bereitstellung einer Versorgungsspannung mittels parallel geschalteter Generatoreinheiten, die jeweils einen Regler und einen Generator aufweisen, bekannt, wobei die Regler einen Messspannungseingang und einen Monitorausgang aufweisen und die Versorgungsspannung am Ausgang der parallel geschalteten Generatoreinheiten bereitgestellt wird. In einer Initialisierungsphase werden die Messspannungseingänge und Monitorausgänge der Regler zur Zuweisung von Masterfunktion oder Slavefunktion und/oder zur Adressvergabe für den Parallelbetrieb verwendet und im nachfolgenden Parallelbetrieb wird dem Messspannungseingang des Reglers der Masterfunktion ausübenden Generatoreinheit eine Messspannung zugeführt. Der Regler der Masterfunktion ausübenden Generatoreinheit generiert in Abhängigkeit von der Messspannung ein Generatorsteuersignal für den Generator der Masterfunktion ausübenden Generatoreinheit Am Monitorausgang des Reglers der Masterfunktion ausübenden Generatoreinheit wird ein Monitorsignal ausgegeben, das die Auslastung des Generators der die Masterfunktion ausübenden Generatoreinheit beschreibt.

Aus der DE 197 04 662 werden Verfahren zur Lastsymmetrierung mit mehreren autark arbeitenden Stromversorgungsmodulen beschrieben. Diese Stromversorgungsmodule arbeiten nach dem Master-Slave-Prinzip zusammen und stehen miteinander über eine gemeinsame Leitung in Verbindung. Die Leitung stellt einen Bus dar und ist ein leitungsgebundenes System oder ein mit einem Lichtwellenleiter aufgebautes System. Der Bus steht nicht mit Messspannungseingängen in Verbindung.

### Vorteile der Erfindung

Ein Verfahren mit den im Anspruch 1 angegebenen Merkmalen weist den Vorteil auf, dass im Zusammenhang mit der Bereitstellung einer Versorgungsspannung mittels parallel geschalteter Generatoreinheiten, die jeweils einen Regler und einen Generator aufweisen, keine zusätzlichen Anschlüsse an den Reglern benötigt werden, um eine Zuteilung von Master- und Slavefunktion, eine Symmetrierung der Lastverteilung und ggf. eine Adressvergabe zu realisieren.

Dieser Vorteil wird im Wesentlichen dadurch erreicht, dass ohnehin vorhandene Anschlüsse der Regler, nämlich die Messspannungseingänge und die Monitorausgänge, in der Initialisierungsphase zu einem anderen Zweck verwendet werden als im späteren Parallelbetrieb. In der Initialisierungsphase werden die genannten Anschlüsse zur Zuweisung von Master- oder Slavefunktion und bei Bedarf auch zur Adressvergabe verwendet. Im nachfolgenden Parallelbetrieb wird dem Messspannungseingang des Reglers der Masterfunktion ausübenden Generatoreinheit eine Messspannung zugeführt, anhand derer der Regler ein Generatorsteuersignal für den zugehörigen Generator ermittelt. Am Monitorausgang dieses Reglers wird ein Monitorsignal ausgegeben, das die Auslastung des Generators beschreibt. Dieses Monitorsignal wird den Messspannungseingängen der Regler der weiteren Generatoreinheiten zugeführt, um den Auslastungsgrad der Generatoren in Übereinstimmung zu bringen.

Vorzugsweise ordnet sich in der Initialisierungsphase die erste Generatoreinheit anhand eines dem Messspannungseingang ihres Reglers zugeführten Gleichspannungswertes Masterfunktion zu. Die weiteren Generatoreinheiten identifizieren sich als Slave, wenn zu diesem Zeitpunkt an ihren Messspannungseingängen Bezugspotential anliegt.

Der Regler der die Masterfunktion ausübenden Generatoreinheit initiiert während der Initialisierungsphase auch die Adressvergabe an die einzelnen weiteren Generatoreinheiten, indem sie an ihrem Monitorausgang ein Kennungssignal bereitstellt, welches dem Messsignaleingang des Reglers einer nachgeschalteten Generatoreinheit zugeführt wird. Anhand dieses Kennungssignals identifiziert der Regler der nachgeschalteten Generatoreinheit deren Position, ordnet sich selbst eine individuelle Adresse zu und stellt an seinem Monitorausgang ein modifiziertes Kennungssignal zur Verfügung. Dieses wird wiederum dem Messsignaleingang des Reglers einer nachfolgenden Generatoreinheit zugeführt, die ihre Position erkennt und sich selbst eine individuelle Adresse zuordnet, usw..

Im späteren Parallelbetrieb werden die Messsignaleingänge der Regler der weiteren Generatoreinheiten dazu verwendet, der jeweiligen Generatoreinheit ein einen Lastausgleich der Generatoren ermöglichendes Signal zuzuführen.

Weitere vorteilhafte Eigenschaften der Erfindung ergeben sich aus der Erläuterung eines Ausführungsbeispiels anhand der Figur.

### Zeichnung

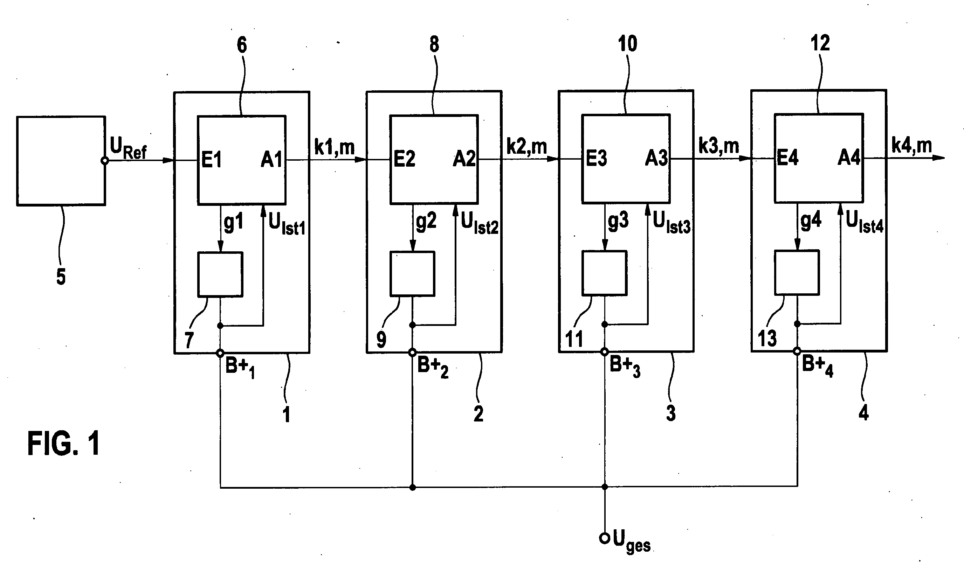

Die Figur 1 zeigt eine Blockdarstellung zur Erläuterung eines Verfahrens und einer Vorrichtung zur Bereitstellung einer Versorgungsspannung für die Bordnetzverbraucher eines Kraftfahrzeugs.

### Beschreibung

Die Figur 1 zeigt eine Blockdarstellung zur Erläuterung eines Verfahrens und einer Vorrichtung zur Bereitstellung einer Versorgungsspannung U_{ges} mittels parallel geschalteter Generatoreinheiten.

In dieser Blockdarstellung sind eine erste Generatoreinheit 1, eine zweite Generatoreinheit 2, eine dritte Generatoreinheit 3 und eine vierte Generatoreinheit 4 enthalten. An den Spannungsversorgungsausgängen dieser Generatoreinheiten werden positive Versorgungsgleichspannungen B+₁, B+₂, B+₃ und B+₄ zur Verfügung gestellt.

Da diese Versorgungsspannungsausgänge miteinander verbunden sind, ist die insgesamt bereitgestellte Versorgungsspannung U_{ges} aus den von den Generatoreinheiten 1, 2, 3 und 4 bereitgestellten Versorgungsspannungen zusammengesetzt. Durch diese Parallelschaltung mehrerer Generatoreinheiten ist gewährleistet, dass der im Betrieb geforderte Leistungsbedarf und die geforderte Zuverlässigkeit der Spannungsversorgung der Verbraucher eines Fahrzeug-bordnetzes gegeben ist.

Die Generatoreinheit 1 weist einen Regler 6 und einen Generator 7 auf. Der Regler 6 hat die Aufgabe, Generatorsteuersignale g1 zu ermitteln und dem Generator 7 zuzuführen. Am Ausgang des Generators 7 steht die von diesem Generator erzeugte Versorgungsgleichspannung B+₁ zur Verfügung, die auch an einem Ausgang der Generatoreinheit 1 bereitgestellt wird. Weiterhin wird die vom Generator 7 erzeugte Versorgungsgleichspannung als Spannungsistwert Uᵢₛₜ₁ an den Regler 6 zurückgeführt und von diesem bei der Ermittlung der Generatorsteuersignale g1 berücksichtigt. Ferner weist der Regler 6 einen Messspannungseingang E1 und einen Monitorausgang A1 auf. Der Messspannungseingang E1 des Reglers 6 ist mit einem externen Spannungsanschluss U_{Ref} verbunden, der beim dargestellten Ausführungsbeispiel ein Spannungsanschluss eines Steuergerätes 5 ist. An diesem Spannungsanschluss wird beispielsweise nach dem Anlassen des Motors des Kraftfahrzeugs oder nach einem Reset-Vorgang die Batteriespannung U_{B} zur Verfügung gestellt. Der Monitorausgang A1 des Reglers 6 ist mit dem Messspannungseingang E2 des Reglers 8 der zweiten Generatoreinheit 2 verbunden.

Die Generatoreinheit 2 weist einen Regler 8 und einen Generator 9 auf. Der Regler 8 hat die Aufgabe, Generatorsteuersignale g2 zu ermitteln und dem Generator 9 zuzuführen. Am Ausgang des Generators 9 steht die von diesem Generator erzeugte Versorgungsgleichspannung B+₂ zur Verfügung, die auch an einem Ausgang der Generatoreinheit 2 bereitgestellt wird. Weiterhin wird die vom Generator 9 erzeugte Versorgungsgleichspannung als Spannungsistwert Uᵢₛₜ₂ an den Regler 8 zurückgeführt und von diesem bei der Ermittlung der Generatorsteuersignale g2 berücksichtigt. Ferner weist der Regler 8 einen Messspannungseingang E2 und einen Monitorausgang A2 auf. Der Messspannungseingang E2 des Reglers 8 ist mit dem Monitorausgang A1 des Reglers 6 der ersten Generatoreinheit 1 verbunden. Der Monitorausgang A2 des Reglers 8 ist mit dem Messspannungseingang E3 des Reglers 10 der dritten Generatoreinheit 3 verbunden.

Die Generatoreinheit 3 weist einen Regler 10 und einen Generator 11 auf. Der Regler 10 hat die Aufgabe, Generatorsteuersignale g3 zu ermitteln und dem Generator 11 zuzuführen. Am Ausgang des Generators 11 steht die von diesem Generator erzeugte Versorgungsgleichspannung B+₃ zur Verfügung, die auch an einem Ausgang der Generatoreinheit 3 bereitgestellt wird. Weiterhin wird die vom Generator 11 erzeugte Versorgungsgleichspannung als Spannungsistwert Uᵢₛₜ₃ an den Regler 10 zurückgeführt und von diesem bei der Ermittlung der Generatorsteuersignale g3 berücksichtigt. Ferner weist der Regler 10 einen Messspannungseingang E3 und einen Monitorausgang A3 auf. Der Messspannungseingang E3 des Reglers 10 ist mit dem Monitorausgang A2 des Reglers 8 der zweiten Generatoreinheit 2 verbunden. Der Monitorausgang A3 des Reglers 10 ist mit dem Messspannungseingang E4 des Reglers 12 der vierten Generatoreinheit 4 verbunden.

Die Generatoreinheit 4 weist einen Regler 12 und einen Generator 13 auf. Der Regler 12 hat die Aufgabe, Generatorsteuersignale g4 zu ermitteln und dem Generator 13 zuzuführen. Am Ausgang des Generators 13 steht die von diesem Generator erzeugte Versorgungsgleichspannung B+₄ zur Verfügung, die auch an einem Ausgang der Generatoreinheit 4 bereitgestellt wird. Weiterhin wird die vom Generator 13 erzeugte Versorgungsgleichspannung als Spannungsistwert Uᵢₛₜ₄ an den Regler 12 zurückgeführt und von diesem bei der Ermittlung der Generatorsteuersignale g4 berücksichtigt. Ferner weist der Regler 12 einen Messspannungseingang E4 und einen Monitorausgang A4 auf. Der Messspannungseingang E4 des Reglers 12 ist mit dem Monitorausgang A3 des Reglers 10 der dritten Generatoreinheit 3 verbunden.

Gemäß der vorliegenden Erfindung werden die Messspannungseingänge und die Monitorausgänge der Regler 6, 8, 10 und 12 in einer Initialisierungsphase zu einem anderem Zweck verwendet als im späteren Parallelbetrieb. In der Initialisierungsphase werden die genannten Anschlüsse zur Zuweisung von Masterfunktion und Slavefunktion und bei Bedarf auch zur Adressvergabe für den Parallelbetrieb verwendet. Im nachfolgenden Parallelbetrieb wird dem Messspannungseingang des Masterfunktion ausübenden Reglers 6 eine Messspannung zugeführt, anhand derer der Regler 6 das Generatorsteuersignal g1 ermittelt. Am Monitorausgang A1 des Reglers 6 wird ein Monitorsignal ausgegeben, das die Auslastung des Generators 7 beschreibt. Dieses Monitorsignal wird - wie unten noch erläutert wird - den Generatoreinheiten 2, 3 und 4 zugeführt, um den Auslastungsgrad aller Generatoren 7, 9, 11 und 12 in Übereinstimmung zu bringen.

Dies wird nachfolgend detaillierter ausgeführt:
Nach dem Anlassen des Motors oder einem Reset-Vorgang befindet sich die gezeigte Vorrichtung zunächst in der Initialisierungsphase. In dieser Initialisierungsphase liegt zunächst am Messspannungseingang E1 des Reglers 6 der ersten Generatoreinheit 1 eine vom Referenzspannungsanschluss U_{Ref} abgeleitete positive Gleichspannung an, bei der es sich beispielsweise um die Batteriespannung des Kraftfahrzeugs handelt. Zum selben Zeitpunkt liegen die Messspannungseingänge E2, E3 und E4 auf Masse.

Der Regler 6 der ersten Generatoreinheit 1 erkennt anhand der vorliegenden positiven Gleichspannung, dass er bzw. die erste Generatoreinheit 1 für den nachfolgenden Parallelbetrieb Masterfunktion übernehmen soll und ordnet sich diese Masterfunktion zu. Die Regler 8, 10 und 12 der zweiten, dritten und vierten Generatoreinheit 2, 3, 4 erkennen anhand des vorliegenden Massepötentials, dass sie bzw. die Generatoreinheiten 2, 3, 4 für den nachfolgenden Parallelbetrieb Slavefunktion übernehmen sollen und ordnen sich jeweils diese Slavefunktion zu.

Ist desweiteren eine Vergabe von Adressen notwendig, dann ordnet sich der Regler 6 der ersten Generatoreinheit 1 nach dem Empfang der genannten positiven Gleichspannung selbst die Adresse "1" zu und stellt weiterhin an seinem Monitorausgang A1 ein Kennungssignal k1 zur Verfügung, welches dem Messspannungseingang E2 des Reglers 8 der nachgeschalteten zweiten Generatoreinheit 2 zugeführt wird.

Der Regler 8 erkennt anhand des übertragenen Kennungssignals k1, dass der ihm vorgeschaltete Regler sich die Adresse "1" zugeordnet hat und ordnet sich selbst die Adresse "2" zu. Weiterhin stellt er an seinem Monitorausgang A2 ein Kennungssignal k2 zur Verfügung, welches dem Messspannungseingang E3 des Reglers 10 der nachgeschalteten dritten Generatoreinheit 3 zugeführt wird.

Der Regler 10 erkennt anhand des übertragenen Kennungssignals k2, dass der ihm vorgeschaltete Regler sich die Adresse "2" zugeordnet hat und ordnet sich selbst die Adresse "3" zu. Weiterhin stellt er an seinem Monitorausgang A3 ein Kennungssignal k3 zur Verfügung, welches dem Messspannungseingang E4 des Reglers 12 der nachgeschalteten vierten Generatoreinheit 4 zugeführt wird.

Der Regler 12 erkennt anhand des übertragenen Kennungssignals k3, dass der ihm vorgeschaltete Regler sich die Adresse "3" zugeordnet hat und ordnet sich selbst die Adresse "4" zu.

Ist diese Adressvergabe beendet, dann übertragen die Regler ihre jeweilige Adresse an ein nicht dargestelltes Steuergerät, welches die Adressen im späteren Betrieb benötigt.

Ist die Initialisierungsphase abgeschlossen, dann geht die dargestellte Vorrichtung in den Parallelbetrieb über. Ein Kriterium für die Beendigung der Initialisierungsphase ist beispielsweise der Zeitpunkt des Abschlusses der Übermittlung der Adressen an das nicht dargestellte Steuergerät oder der Ablauf einer vorgegebenen Zeit nach dem Anlassen des Motors oder dem erfolgten System-Reset.

Im Parallelbetrieb haben die Messspannungseingänge E1, E2, E3, E4 und die Monitorausgänge A1, A2, A3, A4 der Regler eine andere Funktion als in der Initialisierungsphase.

Im Parallelbetrieb verwendet der Regler 6 der Masterfunktion ausübenden Generatoreinheit 1 die ihm über seinen Messspannungseingang E1 zugeführte Messspannung, die von einem Spannungsmesspunkt abgeleitet ist, zur Ermittlung der Generatorsteuersignale g1 für den Generator 7. In diese Ermittlung geht auch die vom Generatorausgang abgeleitete Istspannung U_{Ist1} ein. Weiterhin stellt der Regler 6 im Parallelbetrieb an seinem Monitorausgang A1 ein Monitorsignal m zur Verfügung, welches dem Messspannungseingang E2 des Reglers 8 der zweiten Generatoreinheit 2 zugeführt wird. Dieses Monitorsignal m enthält eine Information über die Auslastung des Generators 7 der ersten Generatoreinheit 1 und wird vom Regler 8 dazu verwendet, das Generatorsteuersignal g2 derart zu erzeugen, dass die Auslastung des Generators 9 der zweiten Generatoreinheit 2 mit der Auslastung des Generators 7 der ersten Generatoreinheit 1 in Übereinstimmung gebracht wird. Ferner stellt der Regler 8 an seinem Monitorausgang A2 das genannte Monitorsignal m unverändert zur Verfügung.

Von dort aus wird das Monitorsignal m auch dem Regler 10 der dritten Generatoreinheit über dessen Messspannungseingang E3 zugeführt. Der Regler 10 verwendet das Monitorsignal m dazu, das Generatorsteuersignal g3 derart zu erzeugen, dass die Auslastung des Generators 11 der dritten Generatoreinheit 3 mit der Auslastung des Generators 7 der ersten Generatoreinheit 1 und der Auslastung des Generators 9 der zweiten Generatoreinheit 2 in Übereinstimmung gebracht wird. Ferner stellte der Regler 10 an seinem Monitorausgang A3 das genannte Monitorsignal m unverändert zur Verfügung.

Von dort aus wird das Monitorsignal m auch dem Regler 12 der vierten Generatoreinheit 4 über dessen Messspannungseingang E4 zugeführt. Der Regler 12 verwendet das Monitorsignal m dazu, das Generatorsteuersignal g4 derart zu erzeugen, dass die Auslastung des Generators 13 der vierten Generatoreinheit 4 mit der Auslastung des Generators 7 der ersten Generatoreinheit 1, der Auslastung des Generators 9 der zweiten Generatoreinheit 2 und der Auslastung des Generators 11 der dritten Generatoreinheit 3 in Übereinstimmung gebracht wird.

Die nachfolgende Tabelle veranschaulicht die unterschiedlichen Verwendungen der Messspannungseingänge und Monitorausgänge der Regler während der Initialisierungsphase und im späteren Parallelbetrieb.

**Tabelle 1:**

| | **Initialisierungsphase** | **Parallelbetrieb** |
|---|---|---|
| E1 | Zuordnen der Masterfunktion; Zuteilung der Adresse 1 | Empfang der Messspannung zur Ge nerierung von g1 |
| A1 | Ausgabe des Kennungssignals k1 | Ausgabe des Monitorsignals m |
| E2 | Zuordnen der Slavefunktion; Zuteilung der Adresse 2 | Empfang des Monitorsignals zur Generierung von g2 |
| A2 | Ausgabe des Kennungssignals k2 | Ausgabe des Monitorsignals m |
| E3 | Zuordnen der Slavefunktion; Zuteilung der Adresse 3 | Empfang des Monitorsignals m zur Generierung von g3 |
| A3 | Ausgabe des Kennungssignals k3 | Ausgabe des Monitorsignals m |
| E4 | Zuordnen der Slavefunktion; Zuteilung der Adresse 4 | Empfang des Monitorsignals m zur Generierung von g4 |
| A4 | Ausgabe des Kennungssignals k4 | Ausgabe des Monitorsignals m |

## Patentansprüche

1. Verfahren zur Bereitstellung einer Versorgungsspannung mittels parallel geschalteter Generatoreinheiten, die jeweils einen Regler und einen Generator aufweisen, wobei der Regler einen Messspannungseingang und einen Monitorausgang aufweist, und wobei die Versorgungsspannung am Ausgang der parallel geschalteten Generatoreinheiten bereitgestellt wird, wobei
- in einer initialisierungsphase die Messspannungseingänge und Monitorausgänge der Regler zur Zuweisung von Masterfunktion oder Slavefunktion und/oder zur Adressvergabe für den Parallelbetrieb verwendet werden und
- im nachfolgenden Parallelbetrieb dem Messspannungseingang des Reglers der Masterfunktion ausübenden Generatoreinheit eine Messspannung zugeführt wird,
- der Regler der Masterfunktion ausübenden Generatoreinheit in Abhängigkeit von der Messspannung ein Generatorsteuersignal für den Generator der Masterfunktion ausübenden Generatoreinheit generiert,
- am Monitorausgang des Reglers der Masterfunktion ausübenden Generatoreinheit ein Monitorsignal ausgegeben wird, das die Auslastung des Generators der die Masterfunktion ausübenden Generatoreinheit beschreibt,
**dadurch gekennzeichnet, dass**
- das am Monitorausgang des Reglers der Masterfunktion ausübenden Generatoreinheit ausgegebene Monitorsignal den Messspannungseingängen der Regler der Slavefunktion ausübenden Generatoreinheiten zugeführt wird, um den Auslastungsgrad der Generatoren in Übereinstimmung zu bringen
- und dass in der Initialisierungsphase sich der Regler der Masterfunktion ausübenden Generatoreinheit selbst eine Adresse zuordnet und an seinem Monitorausgang ein Kennungssignal zur Verfügung stellt, welches eine Information über die Adresse der Masterfunktion ausübenden Generatoreinheit enthält,
- dass dieses Kennungssignal dem Messspannungseingang des Reglers einer nachgeschalteten weiteren Generatoreinheit zugeführt wird und der Regler dieser weiteren Generatoreinheit sich anhand des Kennungssignals selbst eine Adresse zuordnet und am Monitorausgang dieser weiteren Generatoreinheit ein weiteres Kennungssignal zur Verfügung stellt, welches eine Information über die Adresse der weiteren Generatoreinheit enthält.

2. Verfahren nach Anspruch 1, **dadurch gekennzeichnet, dass** in der Initialisierungsphase an den Messspannungseingang einer der Regler der Generatoreinheiten ein Gleichspannungswert angelegt wird, anhand dessen sich der Regler dieser Generatoreinheit Masterfunktion zuordnet.

3. Verfahren nach Anspruch 2, **dadurch gekennzeichnet, dass** der Gleichspannungswert die Bordnetzspannung ist.

4. Verfahren nach Anspruch 2 oder 3, **dadurch gekennzeichnet, dass** der Gleichspannungswert von einem Steuergerät zur Verfügung gestellt wird.

5. Verfahren nach einem der Ansprüche 2 - 4, **dadurch gekennzeichnet, dass** in der Initialisierungsphase die Messspannungseingänge der Regler der weiteren Generatoreinheiten auf ein Bezugspotential gelegt werden, anhand dessen sich die Regler der weiteren Generatoreinheiten Slavefunktion zuordnen.

6. Vorrichtung zur Durchführung eines Verfahrens nach einem der vorhergehenden Ansprüche, mit
- einer ersten Generatoreinheit (1) und
- mindestens einer parallel zur ersten Generatoreinheit angeordneten weiteren Generatoreinheit (2,3,4), wobei
- jede Generatoreinheit (1,2,3,4) einen Regler (6,8,10,12) und einen Generator (7,9,11,13) aufweist,
- jeder Regler einen Messspannungseingang (E1,E2,E3,E4) und einen Monitorausgang (A1,A2,A3,A4) hat, und
- die Messspannungseingänge der Regler der weiteren Generatoreinheiten jeweils mit dem Monitorausgang des Reglers einer vorgeschalteten Generatoreinheit verbunden sind.

7. Vorrichtung nach Anspruch 6, **dadurch gekennzeichnet, dass** der Messspannungseingang (E1) des Reglers (6) der ersten Generatoreinheit (1) mit einem Gleichspannungsanschluss (U_{Ref})verbunden ist, an welchem eine Gleichspannung zur Verfügung steht.

8. Vorrichtung nach Anspruch 7, **dadurch gekennzeichnet, dass** der Gleichspannungsanschluss ein Gleichspannungsanschluss eines Steuergerätes (5) ist.

9. Vorrichtung nach Anspruch 8, **dadurch gekennzeichnet, dass** die Gleichspannung eine Batteriespannung ist.

## Claims

1. Method for providing a supply voltage by means of generator units which are connected in parallel and each have a controller and a generator, the controller having a measurement voltage input and a monitor output, and the supply voltage being provided at the output of the generator units which are connected in parallel,
- the measurement voltage inputs and monitor outputs of the controllers being used in an initialization phase to allocate a master function or a slave function and/or to assign addresses for parallel operation, and
- a measurement voltage being supplied during subsequent parallel operation to the measurement voltage input of the controller of the generator unit performing the master function,
- the controller of the generator unit performing the master function generating a generator control signal for the generator of the generator unit performing the master function on the basis of the measurement voltage, and
- a monitor signal which describes the utilization of the generator of the generator unit performing the master function being output at the monitor output of the controller of the generator unit performing the master function,
**characterized in that**
- the monitor signal output at the monitor output of the controller of the generator unit performing the master function is supplied to the measurement voltage inputs of the controllers of the generator units performing the slave function in order to correlate the degree of utilization of the generators,
- and **in that** the controller of the generator unit performing the master function assigns an address to itself in the initialization phase and provides, and its monitor output, an identifier signal containing an item of information relating to the address of the generator unit performing the master function, and
- **in that** this identifier signal is supplied to the measurement voltage input of the controller of a further, downstream generator unit, and the controller of this further generator unit assigns an address to itself using the identifier signal and provides, at the monitor output of this further generator unit, a further identifier signal containing an item of information relating to the address of the further generator unit.

2. Method according to Claim 1, **characterized in that** a DC voltage value is applied to the measurement voltage input of one of the controllers of the generator units in the initialization phase, which DC voltage value is used by the controller of this generator unit to assign a master function to itself.

3. Method according to Claim 2, **characterized in that** the DC voltage value is the vehicle electrical system voltage.

4. Method according to Claim 2 or 3, **characterized in that** the DC voltage value is provided by a control device.

5. Method according to one of Claims 2-4, **characterized in that** the measurement voltage inputs of the controllers of the further generator units are connected to a reference potential in the initialization phase, which reference potential is used by the controllers of the further generator units to assign a slave function to themselves.

6. Device for carrying out a method according to one of the preceding claims, having
- a first generator unit (1), and
- at least one further generator unit (2, 3, 4) which is arranged parallel to the first generator unit,
- each generator unit (1, 2, 3, 4) having a controller (6, 8, 10, 12) and a generator (7, 9, 11, 13),
- each controller having a measurement voltage input (E1, E2, E3, E4) and a monitor output (A1, A2, A3, A4), and
- the measurement voltage inputs of the controllers of the further generator units each being connected to the monitor output of the controller of an upstream generator unit.

7. Device according to Claim 6, **characterized in that** the measurement voltage input (E1) of the controller (6) of the first generator unit (1) is connected to a DC voltage connection (U_{Ref}) at which a DC voltage is available.

8. Device according to Claim 7, **characterized in that** the DC voltage connection is a DC voltage connection of a control device (5).

9. Device according to Claim 8, **characterized in that** the DC voltage is a battery voltage.

## Revendications

1. Procédé pour délivrer une tension d'alimentation au moyen d'unités de générateur raccordées en parallèle et présentant toutes un régulateur et un générateur,
le régulateur présentant une entrée de tension de mesure et une sortie de surveillance,
la tension d'alimentation étant délivrée à la sortie des unités du générateur raccordées en parallèle, et dans lequel
- dans une phase d'initialisation, les entrées de tension de mesure et les sorties de surveillance du régulateur sont utilisées pour attribuer la fonction de maître ou la fonction d'esclave et/ou pour donner des adresses en vue du fonctionnement en parallèle,
- lors du fonctionnement ultérieur en parallèle, une tension de mesure est appliquée à l'entrée de tension de mesure du régulateur de l'unité de générateur qui exerce la fonction de maître,
- le régulateur de l'unité de générateur qui exerce la fonction de maître génère en fonction de la tension de mesure un signal de commande pour le générateur de l'unité de générateur qui exerce la fonction de maître,
- un signal de surveillance qui décrit le taux de charge du générateur de l'unité du générateur qui exerce la fonction de maître est délivré à la sortie de surveillance du régulateur de l'unité de générateur qui exerce la fonction de maître,
**caractérisé en ce que**
- le signal de surveillance délivré à la sortie de surveillance du régulateur de l'unité de générateur qui exerce la fonction de maître est amené aux entrées de tension de mesure des régulateurs des unités de générateur qui exercent la fonction d'esclave pour mettre en accord le taux de charge des générateurs,
- **en ce que** dans la phase d'initialisation, le régulateur de l'unité de générateur qui exerce la fonction de maître attribue lui-même une adresse et applique sur sa sortie de surveillance un signal de caractérisation qui contient une information concernant l'adresse de l'unité du générateur qui exerce la fonction de maître et
- **en ce que** ce signal de caractérisation est amené à l'entrée de tension de mesure du régulateur d'une autre unité de générateur raccordée en aval et le régulateur de cette autre unité de générateur s'attribue lui-même une adresse à l'aide du signal de caractérisation, un autre signal de caractérisation qui contient une information sur l'adresse de l'autre unité de générateur étant appliqué sur la sortie de surveillance de cette autre unité de générateur.

2. Procédé selon la revendication 1, **caractérisé en ce que** dans la phase d'initialisation, une valeur de tension continue est appliquée sur l'entrée de tension de mesure de l'un des régulateurs des unités du générateur, le régulateur utilisant cette valeur de tension continue pour attribuer la fonction de maître à cette unité de générateur.

3. Procédé selon la revendication 2, **caractérisé en ce que** la valeur de tension continue est la tension du réseau de bord.

4. Procédé selon les revendications 2 ou 3, **caractérisé en ce que** la valeur de tension continue est délivrée par un appareil de commande.

5. Procédé selon l'une des revendications 2 à 4, **caractérisé en ce que** lors de la phase d'initialisation, les entrées de tension de mesure des régulateurs des autres unités de générateur sont placées à un potentiel de référence à l'aide duquel les régulateurs attribuent la fonction d'esclave aux autres unités de générateur.

6. Dispositif en vue de l'exécution d'un procédé selon l'une des revendications précédentes, et présentant :
- une première unité de générateur (1),
- au moins une autre unité de générateur (2, 3, 4) disposées en parallèle par rapport à la première unité de générateur,
- chaque unité de générateur (1, 2, 3, 4) présentant un régulateur (6, 8, 10, 12) et un générateur (7, 9, 11, 13),
- chaque régulateur possédant une entrée de tension de mesure (El, E2, E3, E4) et une sortie de surveillance (A1, A2, A3, A4) et
- les entrées de tension de mesure des régulateurs des autres unités de régulateur sont toutes reliées à la sortie de surveillance de régulateur d'une unité de générateur raccordée en amont.

7. Dispositif selon la revendication 6, **caractérisé en ce que** l'entrée de tension de mesure (E1) du régulateur (6) de la première unité de générateur (1) est reliée à une borne (U_{ref}) de tension continue sur laquelle une tension continue est appliquée.

8. Dispositif selon la revendication 7, **caractérisé en ce que** la borne de tension continue est une borne de tension continue d'un appareil de commande (5).

9. Dispositif selon la revendication 8, **caractérisé en ce que** la tension continue est la tension d'une batterie.
